# FASCICULE DE BREVET EUROPEEN

(11) **EP 3 619 764 B1**
(45) Date de publication et mention de la délivrance du brevet: **11.01.2023**
(21) Numéro de dépôt: 18728927.7
(22) Date de dépôt: 03.05.2018
(51) Int. Cl.: H01M 8/1004, H01M 8/0273

(54) **PREASSEMBLAGE D'ELEMENTS POUR LA FABRICATION D'UN ASSEMBLAGE MEMBRANE / ELECTRODES**
VORMONTAGE VON ELEMENTEN ZUR HERSTELLUNG EINER MEMBRAN / ELEKTRODENANORDNUNG
PREASSEMBLY OF ELEMENTS FOR THE MANUFACTURE OF A MEMBRANE / ELECTRODES ASSEMBLY

(30) Priorité: 03.05.2017 FR 1753913
(43) Date de publication de la demande: 11.03.2020
(73) Titulaire: Commissariat à l'Energie Atomique et aux Energies Alternatives, 75015 Paris (FR)
(72) Inventeur: BUVAT, Pierrick, 37250 Montbazon (FR); CARRIERE, Stéphane, 37510 Villandry (FR); BONNIN, Claude, 37320 Truyes (FR); SERRE, Jérôme, 84120 Pertuis (FR); NGUYEN, Paul, 13530 Trets (FR)
(74) Mandataire: Ernest Gutmann - Yves Plasseraud S.A.S.
(86) Numéro de dépôt international: PCT/FR2018/051110
(87) Numéro de publication internationale: WO 2018/203009

(56) Documents cités:
- US-A1- 2005 014 056
- US-A1- 2008 075 842
- US-A1- 2014 305 596
- US-A1- 2016 380 278

## Description

La présente invention concerne un procédé de solidarisation des couches d'un assemblage de membranes pour pile à combustible.

Les piles à combustible à membrane d'échange de protons, dites PEMFC correspondant à l'acronyme anglais de « proton exchange membrane fuel cells » ou « polymer electrolyte membrane fuel cells », présentent des propriétés de compacité particulièrement intéressantes. Chaque cellule comprend une membrane électrolyte polymère permettant seulement le passage de protons et non le passage des électrons. La membrane est mise en contact avec une anode sur une première face et avec une cathode sur une deuxième face pour former un assemblage membrane/électrodes dit AME.

L'assemblage précité est généralement réalisé par superposition successive des différentes membranes et électrodes avec une interposition de membranes de renfort permettant de supporter l'assemblage. Afin de solidariser les différentes épaisseurs entre elles, il est possible de réaliser une opération de thermocompression de l'assemblage.

En pratique, on constate que la superposition de la membrane renfort et de la membrane électrolyte polymère peut poser des difficultés. En effet, pour effectuer l'assemblage, il peut être souhaitable de préassembler l'une de la première membrane renfort et de la seconde membrane renfort avec la membrane électrolyte polymère pour faciliter la manipulation de la membrane électrolyte polymère et le centrage des différentes membranes les unes avec les autres. Toutefois, il s'avère que la membrane électrolyte polymère est très sensible aux variations d'humidité consécutives des variations de températures, la pression étant par ailleurs constante.

Le document US2005014056 concerne une unité membraneélectrode pour des équipements électrochimiques, notamment pour des piles à combustible à membrane.

Le document US2016380278 concerne un procédé de fabrication d'un ensemble membrane/électrode.

L'invention divulgue un procédé de fabrication d'un assemblage membrane électrolyte polymère/électrodes pour pile à combustible comprenant les étapes suivantes :
a) fournir une membrane de renfort comprenant un bord externe et un bord interne délimitant une ouverture,
b) fournir une membrane électrolyte polymère apte à obturer ladite ouverture de la membrane renfort,
c) la membrane électrolyte polymère et la membrane renfort étant dans des premières conditions de température et d'humidité :
   c1) superposer la membrane électrolyte polymère et la membrane de renfort de manière à ce que la membrane électrolyte polymère obture l'ouverture de la membrane renfort, puis
   c2) solidariser la membrane électrolyte polymère à la membrane renfort,
d) disposer l'ensemble formé à l'issue de l'étape c) sur un support dans des secondes conditions de températures et d'humidité telles que la membrane électrolyte polymère subit une dilatation par rapport à son état dans les premières conditions de température et d'humidité.

Le procédé comprenant également les étapes suivantes :
- fournir une seconde membrane renfort comprenant un bord externe et un bord interne délimitant une ouverture,
- fournir une première et une seconde électrodes chacune apte à obturer les ouvertures des première et seconde membranes renfort,
- agencer les première et seconde membranes renfort, les première et seconde électrodes et la membrane électrolyte polymère de manière à obtenir un empilement successif de la première électrode, de la première membrane renfort, de la membrane électrolyte polymère, de la seconde membrane renfort et de la seconde électrode, les ouvertures des première et seconde membranes renfort étant obturées par les première et seconde électrodes et la membrane électrolyte polymère.

Selon ce procédé, le préassemblage de la membrane électrolyte polymère est réalisé dans des premières conditions de température et manipulé dans des secondes conditions de température et d'humidité dans lesquelles la membrane est apte à subir une dilatation. De cette manière, on peut garantir que la membrane électrolyte polymère ne se contracte pas tant que le préassemblage est soumis aux secondes conditions de température et d'humidité. En pratique, lorsque la pression est la pression atmosphérique et l'humidité de l'air est constante, l'étape c) est réalisée à une température T1 supérieure à la température T2 à laquelle est soumise le préassemblage lorsqu'il est placé sur un support.

Ce support peut être celui d'un magasin de stockage de l'ensemble membrane renfort-membrane électrolyte polymère ou le support statique d'une presse qui est agencé en vis-à-vis d'un piston de ladite presse.

Dans le premier cas, il est ainsi possible de garantir la planéité du préassemblage de la membrane renfort avec la membrane électrolyte polymère, ce qui permet de faciliter la préhension de ce préassemblage par un cadre aspirant notamment. De plus, la garantie de la planéité du préassemblage permet de faciliter l'empilement des autres couches de l'assemblage membrane électrolyte polymère/électrodes les unes sur les autres.

Selon une autre caractéristique, l'étape c) comprend les étapes suivantes :
i) agencer la membrane renfort dans une enceinte soumise aux premières conditions de température et d'humidité,
ii) agencer une membrane électrolyte polymère au-dessus de la membrane renfort de manière à obturer l'ouverture de la membrane renfort ;
iii) découpe de la membrane électrolyte polymère de manière à ce que son bord externe soit inscrit entre le bord interne et le bord externe de la membrane renfort,
iv) solidarisation de la membrane renfort avec la membrane électrolyte polymère.

Selon encore une autre caractéristique, les étapes iii) et iv) comprennent la réalisation, par exemple au moyen d'un faisceau laser, d'un premier contour fermé de soudure de la membrane électrolyte polymère avec la membrane renfort et d'un second contour fermé de soudure de la membrane électrolyte polymère avec la membrane renfort et de découpe seulement de la membrane électrolyte polymère, le second contour entourant le premier contour.

Dans une autre réalisation, les étapes iii) et iv) comprennent la réalisation d'un contour fermé de soudure de la membrane électrolyte polymère avec la membrane renfort et de découpe simultanée de la membrane électrolyte polymère.

Dans une réalisation particulière, la température des premières conditions de température et d'humidité est supérieure de 5 à 50 °C à la température des secondes conditions de température et d'humidité, préférentiellement entre 10 et 20 °C, l'humidité étant sensiblement identiques dans les première et seconde conditions.

L'invention sera mieux comprise et d'autres détails, caractéristiques et avantages de l'invention apparaîtront à la lecture de la description suivante faite à titre d'exemple non limitatif en référence aux dessins annexés.
- la figure 1 est une illustration schématique d'un assemblage électrodemembrane électrolyte polymère-électrode d'un premier type ;
- la figure 2 est une vue schématique d'un préasemblage de membranes obtenu avec le procédé selon l'invention, c'est-à-dire telle que définie par les revendications ;
- la figure 3 est une vue schématique en coupe d'un dispositif destiné à être utilisé pour la réalisation du préassemblage de membranes de la figure 2 ;
- la figure 4 est une vue schématique depuis le dessus du dispositif de la figure 3.

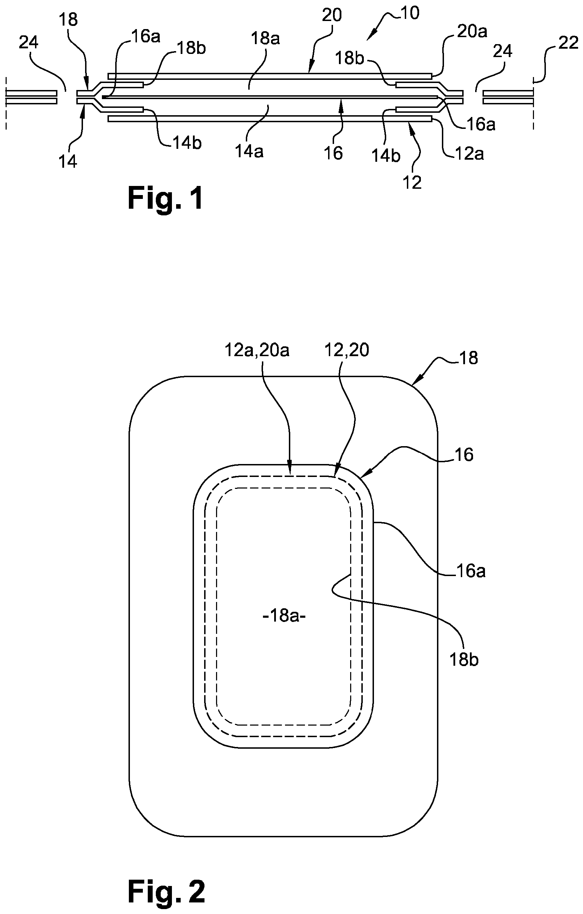

On se réfère tout d'abord à la figure 1 qui représente un assemblage **10** membrane électrolyte polymère/électrodes dit AME comprenant les éléments successifs du bas vers le haut :
- une première électrode **12** ou électrode inférieure apte à former une anode dans une pile à combustible,
- une première membrane **14** ou membrane inférieure de renfort comprenant un bord interne **14b** délimitant une ouverture **14a** obturée inférieurement par la première électrode **12,** le bord externe **12a** de la première électrode **12** étant en contact avec le bord interne **14b** de la première membrane renfort **14,**
- une membrane électrolyte polymère **16** assurant une conduction protonique,
- une seconde membrane **18** ou membrane supérieure de renfort comprenant un bord interne **18b** délimitant une ouverture **18a,**
- une seconde électrode **20** ou électrode supérieure apte à former une cathode dans une pile à combustible et obturant supérieurement l'ouverture **18a** de la membrane **18** supérieure de renfort, le bord externe **20a** de la seconde électrode **20** étant en contact avec le bord interne **18b** de la seconde membrane renfort **18.**

On comprend que sur la figure **1****,** les différentes couches précitées sont en contact les unes avec les autres et que les espacements entre lesdites couches n'existent pas dans un assemblage réel. Comme cela est bien visible sur cette figure, la membrane électrolyte polymère **16** présente un bord externe **16a** qui est appliqué :
- supérieurement sur le bord interne **14b** de la première membrane renfort **14** de manière à obturer supérieurement son ouverture **14a,**
- inférieurement sur le bord interne **18b** de la seconde membrane renfort **18** de manière à obturer supérieurement son ouverture **18a.**

Ainsi, la membrane électrolyte polymère **16** est intégralement logée entre les première **14** et seconde **18** membranes renfort et réalise ainsi un isolement de la membrane électrolyte polymère d'avec les passages de liquide de refroidissement et de gaz purs. Ce type de montage est connu sous le nom anglais de « anti-wicking ». Plus précisément, l'assemblage présenté en figure **1** comprend une découpe périphérique **22** à contour fermé formant un contour externe de l'assemblage **10** membrane électrolyte - électrodes - membranes renfort. L'assemblage **10** comprend également des orifices **24** entre ladite découpe périphérique **22** et le bord externe **16a** de la membrane électrolyte polymère **16,** ces orifices **24** étant destinés au passage de liquide de refroidissement et de gaz purs (H₂ et O₂ ou air). Autrement dit, ces orifices **24** sont formés dans une zone périphérique entourant la membrane électrolyte polymère **16** et les première **12** et seconde **20** électrodes.

Les différentes couches, à savoir, les première **14** et seconde **18** membranes renfort, les première **12** et seconde **20** électrodes et la membrane **16** électrolyte polymère peuvent avoir une forme sensiblement rectangulaire. Les ouvertures **24** des première **14** et seconde **18** membranes renfort peuvent aussi avoir une forme rectangulaire. La membrane **16** électrolyte polymère présente une surface supérieure à celle de la première électrode **12** et celle de la seconde électrode **20.**

On se réfère maintenant à la figure **2** qui représente un préassemblage de la membrane électrolyte polymère **16** avec la seconde membrane renfort **18,** c'est-à-dire avec la membrane supérieure de renfort. Notons que le préassemblage tel qu'il sera décrit ci-après est également applicable à la première membrane renfort **14** ou membrane inférieure de renfort.

Comme cela est bien visible sur la figure **2****,** la seconde membrane renfort **18** est ici représentée dépourvue d'orifices **24,** ceux-ci étant réalisés après l'assemblage et la solidarisation des différentes couches de l'AME. Les première **12** et seconde **20** électrodes sont également représentées en traits pointillés afin de se rendre compte des dimensions respectives des électrodes **12, 20** relativement à la membrane **16** électrolyte polymère.

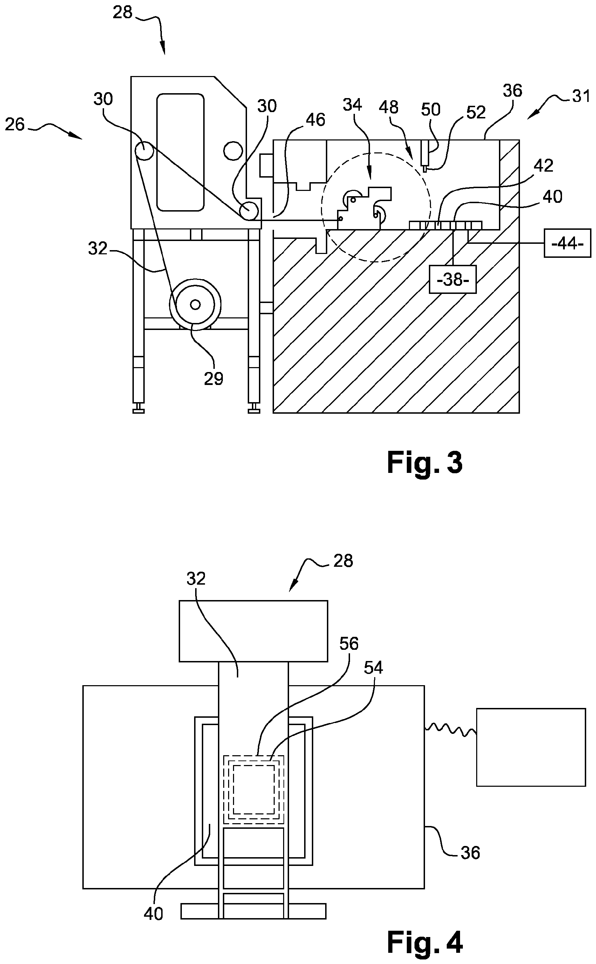

La membrane **16** électrolyte polymère est solidarisée à la seconde membrane renfort **18** au moyen du dispositif **26** représenté au figures **3** et **4****.** Ce dispositif **26** comprend un poste dérouleur **28** d'une bobine **29** de membrane électrolyte polymère **16** et un poste de chauffage **31** et de découpe de la membrane électrolyte polymère. Ce poste dérouleur **28** comprend deux axes **30** de roulement de la bande de la bobine. La bande **32** de la bobine **30** est formée d'une structure multi-couches comprenant une couche de matériau électrolyte polymère recouvert d'un film inférieur de protection et d'un film supérieur de protection. Le poste **31** comprend également des moyens **34** de séparation des films inférieur et supérieur de protection de la couche en matériau électrolyte polymère et d'embobinage desdits films inférieur et supérieur. Ces moyens **34** de séparation et de collecte sont agencés dans une enceinte **36** ou caisson de confinement de moyens **48** de soudure et de découpe. Ce caisson **36** loge également une plaque reliée à un système de chauffage **38** par un cordon chauffant. La plaque **40** est, de préférence, équipée d'une pluralité de trous **42** reliés à des moyens d'aspiration **44.** Le caisson **36** est pourvu d'une fente **46** formée sur une des parois latérales de manière à permettre la circulation de la bande **32** de la bobine **30** agencée à l'extérieur du caisson **36.**

Les moyens de soudure **48** et de découpe agencés à l'intérieur du caisson **36.** Ces moyens **48** comprennent un bras **50** déplaçable dans un plan parallèle au plan du plateau **40** lequel est déplaçable selon un axe vertical, c'est-à-dire perpendiculaire au plan de déplacement du bras **50.** Le bras **50** porte un laser **52** apte à émettre un faisceau en direction du plateau.

Le procédé divulgué par le présent document comprend les étapes suivantes. Un opérateur place une membrane de renfort, à savoir la seconde membrane de renfort **18** sur la plaque **40.** Dans un second temps, l'opérateur tire sur la bande de la bobine de manière à recouvrir l'ouverture **18a** de la seconde membrane renfort **18.** Les moyens d'aspiration **44** sont ensuite mis en fonctionnement de manière à maintenir la seconde membrane renfort **18** et la membrane électrolyte polymère **16** sur la plaque **40.** Dans une étape subséquente, la membrane électrolyte polymère **16** est découpée de manière à obtenir une forme sensiblement rectangulaire et elle est solidarisée à la seconde membrane renfort **18.**

La découpe de la membrane électrolyte polymère **16** et sa solidarisation à la seconde membrane de renfort **18** sont réalisées par soudure laser. On réalise d'abord une solidarisation des deux couches en effectuant un premier contour **54** fermé de soudure de la membrane électrolyte polymère **16** sur le bord interne **18b** de la seconde membrane renfort **18.** Dans un second temps, on réalise un second contour **56** fermé de soudure de la membrane électrolyte polymère **16** sur le bord interne **18b** de la seconde membrane renfort **18,** le second contour **56** entourant le premier contour **54.** La puissance du laser lors de la réalisation du premier contour **54** de soudure est telle qu'elle permet de solidariser la membrane électrolytique polymère **16** à la seconde membrane renfort **18** sans la découper. La réalisation du second contour **56** est suffisante pour permettre une soudure de la membrane électrolytique polymère **16** sur la seconde membrane renfort **18** tout en autorisant une découpe de la membrane électrolytique **16** seule, c'est-à-dire sans découper la seconde membrane renfort. Il est à noter que l'on pourrait également effectuer un seul contour **54** fermé pour réaliser simultanément la soudure de la membrane électrolyte avec la membrane renfort et la découpe de la membrane électrolyte polymère.

A l'intérieur du caisson **36,** la membrane électrolyte polymère **16** et la seconde membrane de renfort **18** sont soumises à des premières conditions de températures et d'humidité. Pour un air ayant une humidité absolue sensiblement constante, il est possible de faire varier l'humidité relative ou degré d'hygrométrie en faisant varier la température. Pour un volume d'air fermé, la diminution de l'humidité relative est obtenue en augmentant la température. Ainsi, pour faire varier le degré d'hygrométrie auquel est soumis la membrane électrolyte polymère **16,** il suffit de faire varier la température. A cette fin, la température de l'enceinte ou du caisson **36** et plus particulièrement celle de la plaque est maintenue à une température T1 supérieure à une température T2 à laquelle la membrane électrolyte polymère sera manipulée conjointement à la seconde membrane de renfort **18** à laquelle elle est solidarisée.

Dans une réalisation particulière de l'invention, la température des premières conditions de température et d'humidité est supérieure de 5 à 50 °C à la température des secondes conditions de température et d'humidité, préférentiellement entre 10 et 20 °C, l'humidité étant sensiblement identiques dans les première et seconde conditions.

La réalisation de l'ensemble membrane électrolyte polymère - seconde membrane renfort à une température supérieure à celle à laquelle ledit ensemble est ensuite manipulé permet que la membrane lorsque celle-ci est soumise à la température T2 relativement à son état à la température T1. Ainsi, la membrane électrolyte polymère fortement sensible aux variations d'humidité n'induit aucune contrainte sur la seconde membrane renfort **18** laquelle peut ainsi être conservée à l'état plan pour son assemblage ultérieur avec les première **12** et seconde **20** électrodes et la première membrane renfort **14.**

A titre d'exemple, pour un air ambiant de référence ayant une humidité relative (HR) de 50% à 20 °C, on peut réguler le caisson à une température de 35°C. Dans ce cas, l'air est localement à 22% d'humidité relative. La faible épaisseur des membranes (10-50µm) permet de considérer que le temps de montée en température de la membrane électrolyte polymère **16** et le temps de stabilisation hydrique de la membrane électrolyte polymère **16** sont inférieurs au temps de positionnement et d'initialisation du cycle de soudure/découpe.

A 35°C 22% HR, la membrane initialement à 20°C 50% HR subit une dilatation thermique de 0,5% et un retrait « hydrique » de 7,8%, soit un retrait global de 7,3%. Après soudure et découpe de la membrane, le bicouche ainsi formé est remis à condition ambiante et la membrane électrolyte polymère 16 subit une déformation inverse (dilatation) de 7,3%. Dès lors, la membrane ne génère aucune contrainte sur le renfort auquel elle est solidaire.

De même, le placement de la membrane électrolyte polymère **16** solidaire de la seconde membrane renfort **18** dans l'environnement de la machine AME, en particulier sur un support statique d'une presse qui est 25°C et donc à 38% HR, entrainera une nouvelle déformation de la membrane mais limitée à :
- 0.2% de dilatation thermique
- 3.4% de retrait « hydrique »
- Soit un retrait global de 3.2%.

La membrane électrolyte polymère **16** étant dilatée de 7,3%, un retrait de 3,2% ne génèrera aucune contrainte sur la membrane renfort qui restera donc parfaitement positionné sur le support des presses. Ce raisonnement vaut aussi pour la manipulation du bicouche membrane électrolyte polymère **16** - seconde membrane renfort **18** qui est plus facile à réaliser avec un cadre aspirant lorsque ledit bicouche est parfaitement plan.

## Revendications

1. Procédé de préassemblage d'éléments constitutifs d'un assemblage membrane électrolyte polymère/électrodes pour pile à combustible comprenant les étapes suivantes :
a) fournir une première membrane renfort (**14**) comprenant un bord externe et un bord interne délimitant une ouverture,
b) fournir une membrane électrolyte polymère (**16**) apte à obturer ladite ouverture (**14a**) de la membrane renfort (**14**),
c) la membrane électrolyte polymère (**16**) et la première membrane renfort (**14**) étant dans des premières conditions de température et d'humidité :
c1)superposer la membrane électrolyte polymère (**16**) et la première membrane de renfort (**14**) de manière à ce que la membrane électrolyte polymère (**16**) obture l'ouverture (**14a**) de la membrane renfort (**14**), puis
c2)solidariser la membrane électrolyte polymère (**16**) à la première membrane renfort (**14**),
d) disposer l'ensemble formé à l'issu de l'étape c) sur un support dans des secondes conditions de température et d'humidité telles que la membrane électrolyte polymère (**16**) subit une dilatation par rapport à son état dans les premières conditions de température et d'humidité.
Le procédé comprenant également les étapes suivantes :
- fournir une seconde membrane renfort (**18**) comprenant un bord externe et un bord interne délimitant une ouverture (**18a**),
- fournir une première et une seconde électrodes (**12, 20**) chacune apte à obturer les ouvertures **(14a, 18a)** des première et seconde membranes renfort (**14, 18**),
- agencer les première et seconde membranes renfort (**14, 18**), les première et seconde électrodes (**12, 20**) et la membrane électrolyte polymère (**16**) de manière à obtenir un empilement successif de la première électrode (**12**), de la première membrane renfort (14), de la membrane électrolyte polymère (16), de la seconde membrane renfort (18) et de la seconde électrode (20), les ouvertures des première et seconde membranes renfort (14, 18) étant obturées par les première et seconde électrodes (12, 20) et la membrane électrolyte polymère (**16**).

2. Procédé selon la revendication 1, dans lequel le support est celui d'un magasin de stockage de l'ensemble première membrane renfort (**14**) - membrane électrolyte polymère (**16**) ou le support statique d'une presse qui est agencé en vis-à-vis d'un piston de ladite presse.

3. Procédé selon la revendication 1 ou 2, dans lequel l'étape c) comprend les étapes suivantes :
i) agencer la première membrane renfort (**14**) dans une enceinte (**36**) soumise aux premières conditions de température et d'humidité,
ii) agencer une membrane électrolyte polymère (**16**) au-dessus de la première membrane renfort (**14**) de manière à obturer l'ouverture (**14a**) de la membrane renfort (**14**) ;
iii) découpe de la membrane électrolyte polymère (**16**) de manière à ce que son bord externe (16a) soit inscrit entre le bord interne (**14b**) et le bord externe de la première membrane renfort (**14**),
iv) solidarisation de la première membrane renfort (**14**) avec la membrane électrolyte polymère (**16**).

4. Procédé selon la revendication 3, dans lequel les étapes iii) et iv) comprennent la réalisation d'un contour fermé (**54**) de soudure de la membrane électrolyte polymère (**16**) avec la première membrane renfort (**14**) et de découpe simultanée de la membrane électrolyte polymère (**16**).

5. Procédé selon la revendication 3 ou 4, dans lequel les étapes iii) et iv) sont réalisées au moyen d'un faisceau laser.

6. Procédé selon l'une des revendications 1 à 5, dans lequel la température des premières conditions de température et d'humidité est supérieure de 5 à 50 °C à la température des secondes conditions de température et d'humidité, préférentiellement entre 10 et 20 °C, l'humidité étant sensiblement identiques dans les premières et secondes conditions.

## Patentansprüche

1. Verfahren zum Vormontieren von Bestandteilen einer Polymerelektrolytmembran/Elektroden-Anordnung für Brennstoffzellen, umfassend die folgenden Schritte:
a) Bereitstellen einer ersten Verstärkungsmembran (14) mit einem Außenrand und einem Innenrand, die eine Öffnung begrenzen,
b) Bereitstellen einer Polymerelektrolytmembran (16), die geeignet ist, die Öffnung (14a) der Verstärkungsmembran (14) zu verschließen,
c) bei ersten Temperatur- und Feuchtigkeitsbedingungen für die Polymerelektrolytmembran (16) und die erste Verstärkungsmembran (14):
c1) Übereinanderlegen von Polymerelektrolytmembran (16) und erster Verstärkungsmembran (14) derart, dass die Polymerelektrolytmembran (16) die Öffnung (14a) der Verstärkungsmembran (14) verschließt, dann
c2) Verbinden der Polymerelektrolytmembran (16) mit der ersten Verstärkungsmembran (14),
d) Anordnen der nach Schritt c) erhaltenen Anordnung auf einen Träger unter zweiten Temperatur- und Feuchtigkeitsbedingungen derart, dass die Polymerelektrolytmembran (16) eine Ausdehnung in Bezug auf ihren Zustand unter den ersten Temperatur- und Feuchtigkeitsbedingungen erfährt,
wobei das Verfahren ferner folgende Schritte umfasst:
- Bereitstellen einer zweiten Verstärkungsmembran (18) mit einem Außenrand und einem Innenrand, die eine Öffnung (18a) begrenzen,
- Bereitstellen einer ersten und einer zweiten Elektrode (12, 20), die jeweils geeignet sind, die Öffnungen (14a, 18a) der ersten und der zweiten Verstärkungsmembran (14, 18) zu verschließen,
- Anordnen der ersten und der zweiten Verstärkungsmembran (14, 18), der ersten und der zweiten Elektrode (12, 20) und der Polymerelektrolytmembran (16) derart, dass eine aufeinanderfolgende Stapelung aus erster Elektrode (12), erster Verstärkungsmembran (14), Polymerelektrolytmembran (16), zweiter Verstärkungsmembran (18) und zweiter Elektrode (20) entsteht, wobei die Öffnungen der ersten und der zweiten Verstärkungsmembran (14, 18) von der ersten und der zweiten Elektrode (12, 20) und der Polymerelektrolytmembran (16) verschlossen werden.

2. Verfahren nach Anspruch 1, wobei es sich bei dem Träger um einen Träger für ein Magazin zur Lagerung der Anordnung aus erster Verstärkungsmembran (14) - Polymerelektrolytmembran (16), oder um den statischen Träger für eine Presse handelt, der einem Kolben der Presse gegenüberliegend angeordnet ist.

3. Verfahren nach Anspruch 1 oder 2, wobei Schritt c) die folgenden Schritte umfasst:
i) Anordnen der ersten Verstärkungsmembran (14) in einer Kammer (36), die den ersten Temperatur- und Feuchtigkeitsbedingungen ausgesetzt ist,
ii) Anordnen einer Polymerelektrolytmembran (16) über der ersten Verstärkungsmembran (14) derart, dass die Öffnung (14a) der Verstärkungsmembran (14) verschlossen wird;
iii) Zuschneiden der Polymerelektrolytmembran (16) derart, dass ihr Außenrand (16a) zwischen dem Innenrand (14b) und dem Außenrand der ersten Verstärkungsmembran (14) eingeschrieben ist,
iv) Verbinden der ersten Verstärkungsmembran (14) mit der Polymerelektrolytmembran (16).

4. Verfahren nach Anspruch 3, wobei die Schritte iii) und iv) die Herstellung einer geschlossenen Kontur (54) zum Verschweißen der Polymerelektrolytmembran (16) mit der ersten Verstärkungsmembran (14) und zum gleichzeitigen Zuschneiden der Polymerelektrolytmembran (16) umfassen.

5. Verfahren nach Anspruch 3 oder 4, wobei die Schritte iii) und iv) unter Verwendung eines Laserstrahls ausgeführt werden.

6. Verfahren nach einem der Ansprüche 1 bis 5, wobei die Temperatur der ersten Temperatur- und Feuchtigkeitsbedingungen um 5 bis 50 °C höher ist als die Temperatur der zweiten Temperatur- und Feuchtigkeitsbedingungen, vorzugsweise zwischen 10 und 20 °C, wobei die Feuchtigkeit bei den ersten und zweiten Bedingungen im Wesentlichen gleich ist.

## Claims

1. A method for pre-assembling components of a polymer electrolyte membrane/electrode assembly for fuel cells comprising the following steps:
a) providing a first reinforcing membrane (14) comprising an outer edge and an inner edge defining an opening,
b) providing a polymer electrolyte membrane (16) capable of sealing said opening (14a) of the reinforcing membrane (14),
c) the membrane (16) and the first reinforcing membrane (14) being under first conditions of temperature and humidity:
c1) superimposing the polymer electrolyte membrane (16) and the first reinforcing membrane (14) so that the polymer electrolyte membrane (16) seals the opening (14a) of the reinforcing membrane (14), then
c2) connecting the polymer electrolyte membrane (16) to the first reinforcing membrane (14),
d) placing the assembly formed at the end of step c) on a support under second temperature and humidity conditions such that the polymer electrolyte membrane (16) expands compared to its state under the first temperature and humidity conditions.
the process further comprising the following steps:
- providing a second reinforcing membrane (18) comprising an outer edge and an inner edge defining an opening (18a),
- providing first and second electrodes (12, 20) each capable of sealing the openings of the first and second reinforcing membranes (14, 18),
arranging the first and second reinforcing membranes (14, 18), the first and second electrodes (12, 20) and the polymer electrolyte membrane (16) so as to obtain a successive stacking of the first electrode (12), the first reinforcing membrane (14), the polymer electrolyte membrane (16), the second reinforcing membrane (18) and the second electrode (20), the openings of the first and second reinforcing membranes (14, 18) being sealed by the first and second electrodes (12, 20) and the polymer electrolyte membrane (16).

2. A method according to claim 1, wherein the support is that of a storage magazine of the first reinforcing membrane (14) - polymer electrolyte membrane (16) assembly or the static support of a press which is arranged opposite a piston of said press.

3. A method according to claim 1 or 2, wherein step d) comprises the following steps:
i) placing the first reinforcing membrane (14) in an enclosure (36) subjected to the first temperature and humidity conditions,
ii) arranging a polymer electrolyte membrane (16) above the first reinforcing membrane (14) so as to seal the opening (14a) of the reinforcing membrane (14);
iii) cutting the polymer electrolyte membrane (16) so that its outer edge (16a) is inscribed between the inner edge (14b) and the outer edge of the first reinforcing membrane (14),
iv) securing the first reinforcing membrane (14) with the polymer electrolyte membrane (16).

4. A method according to claim 3, wherein steps iii) and iv) comprise the realization of a closed contour (54) of the polymer electrolyte membrane (16) welding with the first reinforcing membrane (14) and simultaneously cutting the polymer electrolyte membrane (16).

5. A method according to claim 3 or 410, wherein steps iii) and iv) are carried out using a laser beam.

6. A method according to any one of claims 1 to 5, wherein the temperature of the first temperature and humidity conditions is 5 to 50°C higher than the temperature of the second temperature and humidity conditions, preferably between 10 and 20°C, humidity being substantially the same under the first and second conditions.
